# EUROPEAN PATENT SPECIFICATION

(11) **EP 2 003 672 B1**
(45) Date of publication and mention of the grant of the patent: **08.08.2012**
(21) Application number: 07425365.9
(22) Date of filing: 11.06.2007
(51) Int. Cl.: H01H 71/08, H02B 1/20

(54) **Electric connection base for a molded case circuit breaker**
Elektrischer Sockelkontakt für einen Leistungsschalter mit gegossenem Gehäuse
Socle de connexion électrique pour un disjoncteur à boîtier moulé

(43) Date of publication of application: 17.12.2008
(73) Proprietor: Bticino S.p.A., 20154 Milano (IT)
(72) Inventor: Fabrizi, Fabrizio, 24100 Bergamo (IT)
(74) Representative: Carangelo, Pierluigi

(56) References cited:
- EP-A- 0 944 144
- EP-A1- 0 608 184
- EP-A1- 0 685 865
- DE-A1- 19 600 557
- FR-A1- 2 859 317

## Description

The present invention relates to the field of electrical circuit breakers and in particular to a supporting and electrical connection base for an electrical circuit breaker.

In order to mechanically fix a molded case circuit breaker into the internal space of an electrical switchboard and to ensure an electrical connection of such a circuit breaker to an electrical installation, the use of a supporting and electrical connection base is already known. Such a base is usually mechanically fixed to the electrical switchboard, for instance to a vertical plate or to busbar elements housed inside the internal space of the electrical switchboard, wherein the base is moreover electrically connected inside the electrical switchboard to an electrical installation to which the circuit breaker has to be connected and in particular to an electric circuit positioned before the circuit breaker, also known as "line circuit", and to an electrical circuit positioned after the circuit breaker, also known as "load circuit".

The base includes two arrays of spaced apart electrical connection terminals, for instance two arrays of clamps, which interact with respective connection terminals of the circuit breaker, for example formed by rods to be inserted in corresponding base clamps. The connection terminals of the circuit breaker are also distributed on two spaced apart arrays, corresponding to two opposite sides of the molded case body of the circuit breaker. As is well known to the skilled in the art, each of the electrical connection terminals arrays of the base and of the breaker includes three or four horizontally aligned electrical connection terminals. The number of terminals in an array depends on the specific type of molded case circuit breaker, which may be of the tripolar or quadripolar type. The mechanical fixing of the circuit breaker to the base is generally obtained by screws or similar fixing means.

The use of a supporting and electrical connection base inside an electrical switchboard allows a particularly easy and fast removal of the circuit breaker from the electrical switchboard and its successive re-assembling, if necessary. The removal of a circuit breaker is necessary for instance when the breaker mounted in the switchboard has to be replaced with a new one, or when, as imposed by security regulations, the temporary removal of the circuit breaker from the switchboard is required in order to service and maintain the electrical systems controlled by said breaker.

Nowadays, some of the manufacturers in this particular technical field, as for instance the applicant of same invention, offer molded case circuit breakers having different vertical sizes, since for example the market requires magneto-thermal molded case circuit breakers with or without an integrated differential protection module. Since the pitch between two arrays of connection terminals of a molded case breaker depends on the vertical size of the breaker, it's necessary to manufacture various types of supporting and connection bases, which differ from each other substantially in their differently spaced apart electrical connection terminals. Document FR-A1-2 859 317 discloses supporting and electrical connection base according to the preamble of claim 11.

The object of the present invention is to provide a supporting and electrical connection base, which, as opposed to the bases of the known art, may be used with molded case circuit breakers, having different vertical sizes and in particular having a different pitch between two arrays of connection terminals.

This object is achieved by using a supporting and electrical connection base as defined in the first appended claim, in its more general form and in the dependent claims, in its particular embodiments.

An object of the present invention is also a group of parts according to appended claim 13.

The invention will be more clearly understood by reading the following detailed description of some of its embodiments, which are only examples and therefore do not limit the scope of the invention, with reference to the appended drawings, in which:
Fig. 1 schematically shows a planar front view of a particularly preferred embodiment of a supporting and electrical connection base according to the present invention,
Fig. 2 schematically shows a side view of the base of fig. 1 and a side view of a first molded case circuit breaker, which may be coupled to the base,
Fig. 3 schematically shows a side view of base of fig. 1, of a protection auxiliary component and of a second molded case circuit breaker which may be connected to the base, and
Fig. 4 shows a three-dimensional view of the base, of the auxiliary component and of the circuit breaker of fig. 3, in an embodiment in which such elements are connected to each other.

In the figures, same or similar elements are indicated by the same reference numerals.

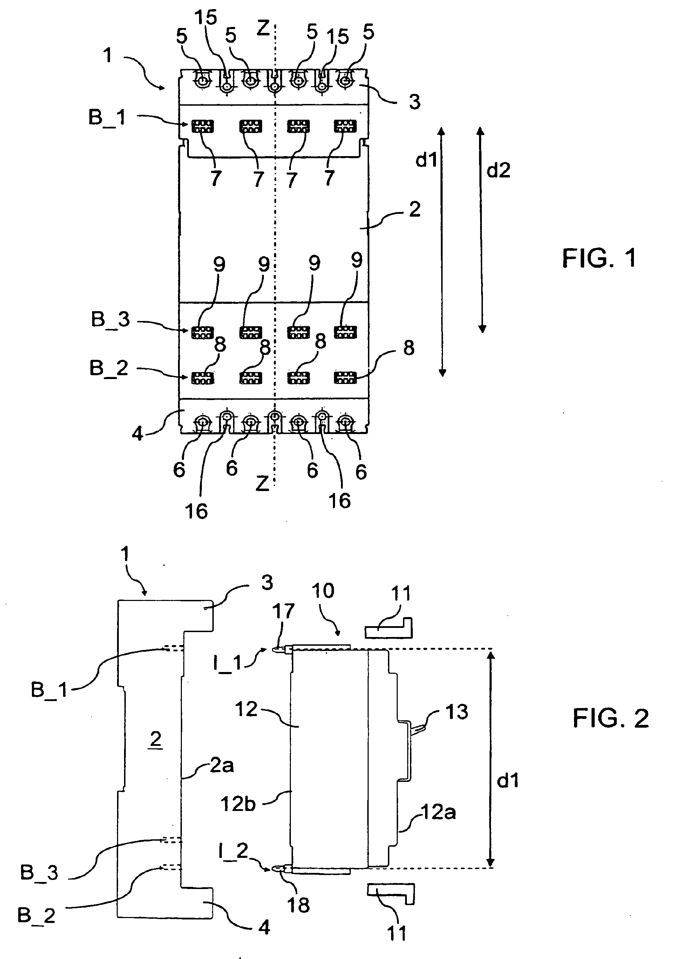

With reference to figs. 1 and 2, a particularly preferred exemplary but not limiting embodiment is shown, of a supporting and electrical connection base according to the present invention, generally indicated by 1.

The base 1 may be used to mechanically fix a molded case circuit breaker 10 inside an electrical switchboard and to ensure the electrical connections between the circuit breaker 10 and an electrical circuit, which is positioned before the base 1 and an electrical circuit positioned after the base 1. The electrical circuits before and after the base 1 are generally referred to as "line circuit" and "load circuit", respectively.

A molded case circuit breaker, as opposed to a so called air circuit breaker, has a case body 12 made of insulating material, which holds the internal mechanisms and circuits of the circuit breaker. Today, molded case circuit breakers are generally employed in industrial automation and maintenance and service sectors, for instance for interrupting currents up to 1500 A.

For example, the molded case circuit breaker 10 is a magneto-thermal circuit breaker. In the example shown, the circuit breaker 10 is embodied in a non limiting way by a molded case automatic quadripolar circuit breaker provided with an integrated differential protection module.

The molded case circuit breaker 10 comprises first I_1 and second I_2 spaced apart arrays of connection terminals, wherein each array I_1 and I_2 is positioned generally at two opposite end portions of the case body 12 of circuit breaker 10. In the example shown, each of said arrays I_1, I_2 comprises four electrical connection terminals, which are horizontally aligned. Thus, in fig. 2, only one connection terminal 17 of array I_1 and one connection terminal 18 of array I_2 are visible. In a particularly preferred embodiment, the terminal arrays I_1, I_2 comprise connection terminals 17, 18 formed by conductive rods, for instance in copper material, which are integral with the circuit breaker 10 or may be fixed to connection clamps integral with the circuit breaker 10.

The circuit breaker 10 may moreover be advantageously provided with holding knobs 11, which may be coupled to opposite faces of the case body 12 of the circuit breaker, to facilitate the coupling/decoupling between the circuit breaker 10 and the base 1.

The base 1 has a body 2, 3, 4 of electrical insulating material, of a generally parallelepiped form, with a front face 2a to be juxtaposed to a rear face 12b of the body 12 of circuit breaker 10. In the present description, the rear face 12b of circuit breaker 10 is the face of the body 12 of circuit breaker 1 opposite to face 12a of circuit breaker 10 provided with an operating lever 13.

As shown in fig. 2, in a particularly preferred embodiment, the body 2, 3, 4 of base 1 comprises a generally "C"-shaped section along the longitudinal axis Z-Z, with a central portion 2 interposed between two opposite end portions 3, 4 protruding with respect to the central portion 2 of the front face portion 2a.

The base 1 is provided, at the protruding end portion 3, with a first array of connection terminals 5, or input terminals, which are horizontally aligned and provide the electrical connection between the base 1 and the line circuit inside an electrical switchboard. For example, the connection terminals 6 comprise screw clamps, which may be connected to distribution bars housed inside an electrical switchboard.

Analogously, the base 1 is provided, at the protruding end portion 3 of body 2, of a second array of connection terminals 6, or output terminals, which are horizontally aligned and provide the electrical connection between the base 1 and the load circuit inside an electrical switchboard. For example, the connection terminals 6 comprise screw clamps, which may be connected to distribution bars housed inside an electrical switchboard.

As is evident to the skilled in the art, since in the particular example shown, the circuit breaker 10 is a quadripolar circuit breaker, each of the arrays of input terminals 5 and output terminals 6 of base 1 comprises four terminals.

Moreover, the base 1 is provided with means 15, 16 to allow its mechanical fixing inside the electrical switchboard. For example, such fixing means are embodied by arrays of holes and notches 15, 16, which facilitate the coupling of base 1, by means of screws, pins or similar or equivalent removable coupling means, to a vertical plate or struts/beams housed inside the electrical switchboard.

The base 1 comprises a first B_1 and second B_2 array of electrical connection terminals 7, 8, which are spaced from each other at a distance such as to cooperate with the first I_1 and second I_2 array of electrical terminals of circuit breaker 10. For example, the distance d1 between the terminal arrays B_1 and B_2 for connection to the base 1, is equal to the distance d1 between the two opposite arrays I_1, I_2 of connection terminals 17, 18 of circuit breaker 10. In the example shown, each of connection terminals 7 of array B_1 is electrically connected to a respective input terminal 5 of base 1, whereas each of connection terminals 8 of array B_2 is electrically connected to a respective output terminal 6 of base 1. In a particularly preferred embodiment, the connection terminals 7, 8 of arrays B_1, B_2 are clamps, which are accessible through respective openings formed in the front face 2a of base 1, and in which the connection terminals 17, 18 of circuit breaker 10 may be inserted.

With reference to fig. 2, in order to couple circuit breaker 10 to base 1, it is sufficient to abut the rear face 12b of circuit breaker 10 against the front face 2a of base 1, after optionally applying the knobs 11 on circuit breaker 10, inserting the electrical terminals of arrays I_1, I_2 in respective terminals of arrays B_1, B_2, in order to establish an electrical connection between the base 1 and circuit breaker 10. In order to fix the base 1 to circuit breaker 10, it is possible to provide mechanical fixing/anchoring means, not shown, such as screws, pins, hooks, clips or more generally removable fixing/anchoring means, which are similar or equivalent.

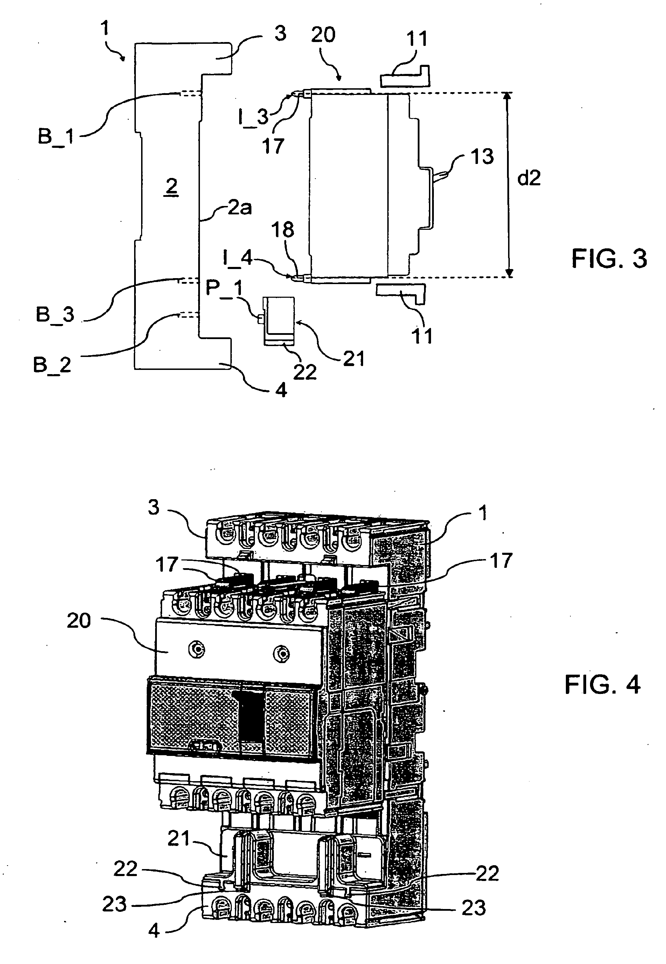

As shown in fig. 1, the base 1 further comprises a further array B_3 of connection terminals, which is positioned between the array B_1 and array B_2 in order to provide the connection of a second molded case circuit breaker 20, shown in fig. 3, as an alternative to the connection of the molded case breaker 10 to base 1, wherein the second circuit breaker is provided with two arrays I_3, I_4 of connection terminals 17, 18, which are positioned at a distance smaller than the distance between the two arrays I_1, I_2 of connection terminals of circuit breaker 10. For example, the distance d2 between the arrays B_1 and B_3 of connection terminals of base 1 is equal to distance d2 between the two opposite arrays I_3, I_4 of connection terminals 17, 18 of molded case circuit breaker 20. It may be noticed that in the particular example shown, in a non limiting way, the array B_3 is in a proximal position with respect to array B_2 and in a distal position with respect to array B_1.

The difference between the distance d1, d2 of two arrays I_1 and I_2 of first circuit breaker 10 and two arrays I_3 and I_4 of second circuit breaker 20 is for example due to different vertical sizes of said circuit breakers 10, 20. For example, the circuit breaker 20 is a molded case magneto-thermal circuit breaker, which lacks an integrated differential protection module, and therefore has a height smaller, by some cm, for example ca. 3 cm, with respect to the height of circuit breaker 10.

In the example shown, each of connection terminals 9 of array B_3 is electrically connected to a respective output terminal 6 of base 1 and therefore also to a respective connection terminal 8 of terminal array B_2. In a particularly preferred embodiment, connection terminals 9 of array B_3 are also formed by clamps, which may be accessed through respective openings formed in front face 2a of base 1, inside which openings the connection terminals 17, 18 of molded case circuit breaker 20 may be inserted.

From the preceding description it may be deduced that by providing the base 1 with an auxiliary array B_3 of connection terminals, interposed between arrays B_1, B_2, two circuit breakers 10, 20 having different vertical sizes may be alternatively coupled to a same base 1, and in particular:
- by electrically connecting the first circuit breaker 10 to base 1 between arrays B_1 and B_2; or
- by electrically connecting the second circuit breaker 20 to base 1 between arrays B_1 and B_3.

As shown in fig. 3, in a particularly advantageous embodiment, when base 1 is coupled to circuit breaker 20, i.e. the circuit breaker having a reduced vertical size, and which is therefore not connected to terminal array B_2 of base 1, it is possible to use a protection component 21 made of insulating material, which may be removably fixed to base 1 in order to avoid a dangerous access to terminal array B_2. Preferably, the protection component 21 comprises an array of protruding elements P_1, each of these elements being insertable in a respective clamp 8 of array B_2, passing through the openings provided in the front face 2a of base 1.

The group of parts of fig. 3 is shown in a three-dimensional view in fig. 4, in an assembled arrangement, wherein, for sake of clarity, the knobs 11 are omitted. In the particularly preferred embodiment of fig. 4, removable coupling means are provided between the protection component 21 and the protruding end portion of base 1. In particular, the protruding end portion 4 of base 1 is provided with grooves, in which correspondingly shaped protruding flaps 22 of the protection component 21 are to be inserted, in order to form a coupling system made of complementing locking elements, in which the coupled condition is obtained by sliding the protection component 21 with respect to the protruding portion 4 of base 1, until a snap-in position is reached. This condition is achieved for instance by providing the base 1 with flexible teeth 23, which cooperate with corresponding recesses provided in the protection component 21.

A skilled in the art may obviously introduce various modifications and variants to above said supporting and electrical connection base, in order to comply with contingent and specific needs, as defined by the following claims.

## Claims

1. Supporting and electrical connection base (1), for mechanically fixing and electrically connecting a first molded case circuit breaker (10) inside an electrical switchboard, wherein the base (1) is adapted to be coupled to the first molded circuit breaker (10)
which circuit breaker (10) comprises first and second spaced apart arrays (I_1, I_2) of electrical connection terminals (17, 18), the base (1) comprising:
- a primary body (2, 3, 4) made of insulating material, having a front face (2a) adapted to be juxtaposed to a rear face (12b) of the first circuit breaker (10);
- a first (B_1) and second (B_2) array of electrical connection terminals (7, 8) placed at a distance (d1) such as to be able to cooperate with the first (I_1, I_2) and second array of electrical connection terminals of the first circuit breaker (10);
- a third array (B_3) of electrical connection terminals (9) placed in an intermediate position between the first (B_1) and second (B_2) arrays of connection terminals of base (1);
**characterized in that**
each of the electrical connection terminals (9) of the third array (B_3) is electrically connected to a respective electrical connection terminal of the second array (B_2), said third array being adapted to, as an alternative to the coupling between the first circuit breaker (10) and the base, couple a second molded case circuit breaker (20), having two arrays (I_3, I_4) of connection terminals, spaced apart at a distance smaller than the distance between the two arrays (I_1, I_2) of connection terminals of the first circuit breaker (10).

2. Base (1) according to claim 1, wherein the first (B_1) and second (B_2) array of base (1) are spaced apart at a distance equal to the distance between the first (I_1) and second (I_2) array of connecting terminals of the first circuit breaker (10).

3. Base (1) according to claim 2, wherein the first (B_1) and third (B_3) array of base (1) are spaced apart at a distance equal to the distance between the first (I_3) and second (I_4) array of connection terminals of the second circuit breaker (20).

4. Base (1) according to any of the preceding claims, wherein the arrays of terminals (B_1, B_2, B_3) of the base (1) comprise clamps accessible through respective openings formed in the front face (2a) of base (1).

5. Base (1) according to any of the preceding claims, further comprising:
- a fourth array of connection terminals (5) electrically connected to respective connection terminals (7) of the first array (B_1) of connection terminals of the base (1), to electrically connect the base (1) to an electrical circuit, placed before the base;
- a fifth array of connection terminals (6), each of which is electrically connected to a respective connection terminal (8) of the second array (B_2) of base (1) and to a respective connection terminal (9) of the third array (B_3) of the base, for electrically connecting the base (1) to an electrical circuit positioned after the base.

6. Base (1) according to claim 5, wherein the fourth and fifth array of terminals are respectively positioned at opposite body end portions (3, 4) of base (1).

7. Base (1) according to claim 6, wherein the base body has a generally "C"-shaped longitudinal section, with a central portion (2) positioned between said opposite end portions (3, 4), wherein the end portions (3, 4) protruding on the side of said front face (2a) with respect to the central portion (2).

8. Base (1) according to any of the preceding claims, wherein the distance between the first (B_1) and the third (B_3) array of connection terminals of the base is greater than the distance between the second (B_2) and third (B_3) array of connection terminals of the base.

9. Base (1) according to claim 8, wherein the distance between the second (B-2) and third (B_3) array of connection terminals of base (1) is approximately equal to 3 cm.

10. Base according to any of the preceding claims, further comprising a protection component (21) made of insulating material, which may be removably positioned on the front face (2a) of base (1) in order to deny access to the second array (B_2) of connection terminals (8) of the base, when the base is coupled to the second molded case circuit breaker (20).

11. Base according to claims 4 and 10, wherein the protection component (21) comprises an array of protruding elements (P_1) to be inserted into a respective clamp (8) terminal through said openings.

12. Base according to claims 7 and 10, wherein the end portion (3) of body (2, 3, 4) of the base, proximal to said third array (B_3) of terminals comprises removable coupling means which cooperate with corresponding coupling means (22) provided in said protection component (21).

13. Group of parts, comprising a base (1) according to any of the preceding claims and said first (10) or second (20) molded case circuit breaker.

14. Group of parts according to claim 13, wherein the first circuit breaker (10) is a magneto-thermal circuit breaker, with an integrated differential module.

15. Group of parts according to claim 13, wherein the second circuit breaker (20) is a magneto-thermal circuit breaker, without an integrated differential module.

## Patentansprüche

1. Sockel (1) mit einer Halte- und elektrischen Verbindungsfunktion zum mechanischen Befestigen und elektrischen Verbinden eines ersten Kompaktleistungsschalters (10) im Inneren eines elektrischen Schaltschranks, wobei der Sockel (1) dazu geeignet ist, mit dem ersten Kompaktleistungsschalter (10) verbunden zu werden, wobei der Leistungsschalter (10) eine erste und eine davon beabstandete zweite Reihe (I_1, I_2) elektrischer Verbindungsanschlüsse (17, 18) aufweist, und wobei der Sockel (1) aufweist:
- einen aus einem isolierenden Material hergestellten primären Körper (2, 3, 4) mit einer Vorderfläche (2a), die dazu geeignet ist, einer Rückfläche (12b) des ersten Leistungsschalters (10) zugewandt zu werden;
- eine erste (B_1) und eine zweite (B_2) Reihe elektrischer Verbindungsanschlüsse (7, 8), die in einem derartigen Abstand (d1) voneinander angeordnet sind, dass sie in der Lage sind, mit der ersten und der zweiten Reihe (I_1, I_2) elektrischer Verbindungsanschlüsse des ersten Leistungsschalters (10) zusammenzuwirken;
- eine an einer Zwischenposition zwischen der ersten (B_1) und der zweiten (B_2) Reihe Verbindungsanschlüsse des Sockels (1) angeordnete dritte Reihe (B_3) elektrischer Verbindungsanschlüsse (9);
**dadurch gekennzeichnet, dass**
jeder der elektrischen Verbindungsanschlüsse (9) der dritten Reihe (B_3) mit einem entsprechenden elektrischen Verbindungsanschluss der zweiten Reihe (B_2) verbunden ist;
die dritte Reihe dazu geeignet ist, alternativ zur Verbindung zwischen dem ersten Leistungsschalter (10) und dem Sockel, mit einem zweiten Kompaktleistungsschalter (20) mit zwei Reihen (I_3), I_4) von Verbindungsanschlüssen verbunden zu werden, die in einem Abstand voneinander beabstandet sind, der kleiner ist als der Abstand zwischen den beiden Reihen (I_1, I_2) von Verbindungsanschlüssen des ersten Leistungsschalters (10).

2. Sockel (1) nach Anspruch 1, wobei die erste (B_1) und die zweite (B_2) Reihe des Sockels (1) in einem Abstand voneinander beabstandet sind, der dem Abstand zwischen der ersten (I_1) und der zweiten (I_2) Reihe von Verbindungsanschlüssen des ersten Leistungsschalters (10) gleicht.

3. Sockel (1) nach Anspruch 2, wobei die erste (B_1) und die dritte (B_3) Reihe des Sockels (1) in einem Abstand voneinander beabstandet sind, der dem Abstand zwischen der ersten (I_3) und der zweiten (I_4) Reihe von Verbindungsanschlüssen des zweiten Leistungsschalters (20) gleicht.

4. Sockel (1) nach einem der vorangehenden Ansprüche, wobei die Anschlussreihen (B_1, B_2, B_3) des Sockels Klemmen aufweisen, die über jeweilige Öffnungen zugänglich sind, die in der Vorderfläche (2a) des Sockels (1) ausgebildet sind.

5. Sockel (1) nach einem der vorangehenden Ansprüche, ferner mit:
- einer vierten Reihe von Verbindungsanschlüssen (5), die mit jeweiligen Verbindungsanschlüssen (7) der ersten Reihe (B_1) von Verbindungsanschlüssen des Sockels (1) elektrisch verbunden sind, um den Sockel (1) mit einer vor dem Sockel angeordneten elektrischen Schaltung elektrisch zu verbinden; und
- einer fünften Reihe von Verbindungsanschlüssen (6), die jeweils mit einem entsprechenden Verbindungsanschluss (8) der zweiten Reihe (B_2) des Sockels (1) und mit einem jeweiligen Verbindungsanschluss (9) der dritten Reihe (B_3) des Sockels elektrisch verbunden sind, um den Sockel (1) mit einer hinter dem Sockel angeordneten elektrischen Schaltung elektrisch zu verbinden.

6. Sockel (1) nach Anspruch 5, wobei die vierte und die fünfte Anschlussreihe an gegenüberliegenden Körperendabschnitten (3, 4) des Sockels (1) angeordnet sind.

7. Sockel (1) nach Anspruch 6, wobei der Sockelkörper einen allgemein "C"-förmigen Längsschnitt aufweist, wobei ein Mittelabschnitt (2) zwischen den gegenüberliegenden Endabschnitten (3, 4) angeordnet ist, und wobei die Endabschnitte (3, 4) auf der Seite der Vorderfläche (2a) bezüglich des Mittelabschnitts (2) hervorstehen.

8. Sockel (1) nach einem der vorangehenden Ansprüche, wobei der Abstand zwischen der ersten (B_1) und der dritten (B_3) Reihe von Verbindungsanschlüssen des Sockels größer ist als der Abstand zwischen der zweiten (B_2) und der dritten (B_3) Reihe von Verbindungsanschlüssen des Sockels.

9. Sockel (1) nach Anspruch 8, wobei der Abstand zwischen der zweiten (B_2) und der dritten (B_3) Reihe von Verbindungsanschlüssen des Sockels (1) etwa 3 cm beträgt.

10. Sockel nach einem der vorangehenden Ansprüche, ferner mit einem aus einem isolierenden Material hergestellten Schutzbauteil (21), das auf der Vorderfläche (2a) des Sockels (1) entfernbar angeordnet sein kann, um einen Zugriff auf die zweite Reihe (B_2) von Verbindungsanschlüssen (8) des Sockels zu verhindern, wenn der Sockel mit dem zweiten Kompaktleistungsschalter (20) verbunden ist.

11. Sockel nach Anspruch 4 und 10, wobei das Schutzbauteil (21) eine Reihe vorspringender Elemente (P_1) aufweist, die dafür vorgesehen sind, durch die Öffnungen in eine entsprechende Klemme (8) eingesetzt zu werden.

12. Sockel nach Anspruch 7 und 10, wobei der proximal zur dritten Reihe (B_3) der Anschlüsse angeordnete Endabschnitt (3) des Körpers (2, 3, 4) des Sockels eine entfernbare Kupplungseinrichtung aufweist, die mit einer entsprechenden, im Schutzbauteil (21) angeordneten Kupplungseinrichtung (22) zusammenwirkt.

13. Gruppe von Teilen mit einem Sockel (1) nach einem der vorangehenden Ansprüche und dem ersten (10) oder dem zweiten (20) Kompaktleistungsschalter.

14. Gruppe von Teilen nach Anspruch 13, wobei der erste Leistungsschalter (10) ein magnetothermischer Leistungsschalter mit einem integrierten Differentialmodul ist.

15. Gruppe von Teilen nach Anspruch 13, wobei der zweite Leistungsschalter (10) ein magnetothermischer Leistungsschalter ohne ein integriertes Differentialmodul ist.

## Revendications

1. Base (1) de connexion électrique et de support, destinée à fixer mécaniquement et à connecter électriquement un premier disjoncteur à boîtier moulé (10) à l'intérieur d'un tableau électrique, où la base (1) est adaptée pour être couplée au premier disjoncteur à boîtier moulé (10), lequel disjoncteur (10) comprend
des premier et deuxième réseaux espacés (I_1, I_2) de bornes de connexion électrique (17, 18), la base (1) comprenant :
un corps primaire (2, 3, 4) réalisé en un matériau isolant, présentant une face avant (2a) adaptée pour être juxtaposée à une face arrière (12b) du premier disjoncteur (10) ;
des premier (B_1) et deuxième (B_2) réseaux de bornes de connexion électrique (7, 8) placés à une distance (d1) telle qu'ils sont aptes à coopérer avec les premier et deuxième réseaux (I_1, I_2) de bornes de connexion électrique du premier disjoncteur (10) ;
un troisième réseau (B_3) de bornes de connexion électrique (9) placé dans une position intermédiaire entre les premier (B_1) et deuxième (B_2) réseaux de bornes de connexion de la base (1) ;
**caractérisée en ce que**
chacune des bornes de connexion électrique (9) du troisième réseau (B_3) est électriquement connectée à une borne de connexion électrique respective du deuxième réseau (B_2), ledit troisième réseau étant adapté, en variante au raccordement entre le premier disjoncteur (10) et la base, pour coupler un deuxième disjoncteur à boîtier moulé (20), ayant deux réseaux (I_3, I_4) de bornes de connexion, espacés l'un de l'autre par une distance inférieure à la distance entre les deux réseaux (I_1, I_2) de bornes de connexion du premier disjoncteur (10).

2. Base (1) selon la revendication 1, dans laquelle les premier (B_1) et deuxième (B_2) réseaux de la base (1) sont espacés l'un de l'autre d'une distance égale à la distance entre les premier (I_1) et deuxième (I_2) réseaux de bornes de connexion du premier disjoncteur (10).

3. Base (1) selon la revendication 2, dans laquelle les premier (B_1) et troisième (B_3) réseaux de la base (1) sont espacés l'un de l'autre par une distance égale à la distance entre les premier (I_3) et deuxième (I_4) réseaux de bornes de connexion du deuxième disjoncteur (20).

4. Base (1) selon l'une des revendications précédentes, dans laquelle les réseaux de bornes (B_1, B_2, B_3) de la base (1) comprennent des pinces accessibles à travers des ouvertures respectives formées dans la face avant (2a) de la base (1).

5. Base (1) selon l'une des revendications précédentes, comprenant en outre :
un quatrième réseau de bornes de connexion (5) électriquement connectées à des bornes de connexion respectives (7) du premier réseau (B_1) de bornes de connexion de la base (1), afin de connecter électriquement la base (1) à un circuit électrique, placé avant la base ;
un cinquième réseau de bornes de connexion (6), dont chacune est électriquement connectée à une borne de connexion respective (8) du deuxième réseau (B_2) de la base (1) et à une borne de connexion respective (9) du troisième réseau (B_3) de la base, pour connecter électriquement la base (1) à un circuit électrique placé après la base.

6. Base (1) selon la revendication 5, dans laquelle les quatrième et cinquième réseaux de bornes sont respectivement positionnés au niveau de parties d'extrémité opposées (3, 4) du corps de la base (1).

7. Base (1) selon la revendication 6, dans laquelle le corps de la base présente une section longitudinale globalement en forme de "C", avec une partie centrale (2) positionnée entre lesdites parties d'extrémité opposées (3, 4), où les parties d'extrémité (3, 4) faisant saillie sur le côté de ladite face avant (2a) par rapport à la partie centrale (2).

8. Base (1) selon l'une des revendications précédentes, dans laquelle la distance entre les premier (B_1) et troisième (B_3) réseaux de bornes de connexion de la base est supérieure à la distance entre les deuxième (B_2) et troisième (B_3) réseaux de bornes de connexion de la base.

9. Base (1) selon la revendication 8, dans laquelle la distance entre les deuxième (B_2) et troisième (B_3) réseaux de bornes de connexion de la base (1) est approximativement égale à 3 cm.

10. Base selon l'une des revendications précédentes, comprenant en outre un composant de protection (21) réalisé en un matériau isolant, qui peut être positionné de manière amovible sur la face avant (2a) de la base (1) afin de refuser l'accès au deuxième réseau (B_2) de bornes de connexion (8) de la base, lorsque la base est couplée au deuxième disjoncteur à boîtier moulé (20).

11. Base selon les revendications 4 et 10, dans laquelle le composant de protection (21) comprend un réseau d'éléments en saillie (P-1) à insérer dans une borne à pince (8) respective à travers lesdites ouvertures.

12. Base selon les revendications 7 et 10, dans laquelle la partie d'extrémité (3) de corps (2, 3, 4) de la base, proximale audit troisième réseau (B_3) de bornes comprend des moyens de raccordement amovibles qui coopèrent avec des moyens de raccordement correspondants (22) prévus dans ledit composant de protection (21).

13. Groupe de pièces, comprenant une base (1) selon l'une des revendications précédentes et ledit premier (10) ou deuxième (20) disjoncteur à boîtier moulé.

14. Groupe de pièces selon la revendication 13, dans lequel le premier disjoncteur (10) est un disjoncteur magnétothermique, avec un module différentiel intégré.

15. Groupe de pièces selon la revendication 13, dans lequel le deuxième disjoncteur (20) est un disjoncteur magnétothermique, sans module différentiel intégré.
